Europäisches Patentamt

European Patent Office

Office européen des brevets

(19)

(11) **EP 1 108 678 B1**

(12) **FASCICULE DE BREVET EUROPEEN**

(45) Date de publication et mention
de la délivrance du brevet:
**22.10.2003 Bulletin 2003/43**

(51) Int Cl.7: **C01B 39/02**, B01J 29/04,
C10G 47/20

(21) Numéro de dépôt: **00403335.3**

(22) Date de dépôt: **29.11.2000**

(54) **Solide silicoaluminate micro et mésoporeux, procédé de préparation, utilisation comme catalyseur et en conversion d'hydrocarbures**

Mikro- und Mesoporöser Silikoaluminatfestoff, Verfahren zu dessen Herstellung, Verwendung als Katalysator und bei der Umwandlung von Kohlenwasserstoffverbindungen

Micro- and mesoporous silicoaluminate solid, process for its preparation, use thereof as catalysator and in the conversion of hydrocarbons

(84) Etats contractants désignés:
**DE ES GB IT NL**

(30) Priorité: **14.12.1999 FR 9915746**

(43) Date de publication de la demande:
**20.06.2001 Bulletin 2001/25**

(73) Titulaire: **Institut Français du Pétrole**
**92852 Rueil-Malmaison Cedex (FR)**

(72) Inventeurs:
• **Lacombe, Sylvie**
**92500 Rueil Malmaison (FR)**
• **Marseault, David**
**94800 Villejuif (FR)**
• **Caullet, Philippe**
**68110 Illzach (FR)**
• **Kessler, Henri**
**68800 Thann (FR)**
• **Benazzi, Eric**
**78400 Chatou (FR)**
• **Jouve, Alexandre**
**92500 Rueil Malmaison (FR)**

(56) Documents cités:
**EP-A- 0 811 423**

• **K RICHARD KLOETSTRA ET AL: "Mesoporous material containing framework tectosilicate by pore-wall recrystallisation" JOURNAL OF THE CHEMICAL SOCIETY, CHEMICAL COMMUNICATIONS,CHEMICAL SOCIETY. LETCHWORTH,GB, no. 23, 7 décembre 1997 (1997-12-07), pages 2181-2182, XP002162649 ISSN: 0022-4936**
• **KARLSSON, ARNE ET AL: "Attempts of structuring the pore walls of mesoporous MCM-41 materials" PROC. INT. ZEOLITE CONF., 12TH (1999), MEETING DATE 1998, VOLUME 1, 713-718. EDITOR(S): TREACY, M. M. J. PUBLISHER: MATERIALS RESEARCH SOCIETY, WARRENDALE, PA. , 1999, XP000991488**
• **DATABASE CHEMABS [en ligne] CHEMICAL ABSTRACTS SERVICE, COLUMBUS, OHIO, US; GUO, WAN-PING ET AL: "New MCM - 41 -. beta.-zeolite composite molecular sieve with mesoporous and microporous structure" retrieved from STN Database accession no. 131:21087 CA XP002146185 & GAODENG XUEXIAO HUAXUE XUEBAO (1999), 20(3), 356-358, 1999,**
• **DATABASE CHEMABS [en ligne] CHEMICAL ABSTRACTS SERVICE, COLUMBUS, OHIO, US; HUANG, LIMIN ET AL: "Composite porous molecular sieves and their synthesis" retrieved from STN Database accession no. 132:295472 CA XP002146186 & CN 1 208 718 A (FUDAN UNIV., PEOP. REP. CHINA) 24 février 1999 (1999-02-24)**

- **KARLSSON ARNE ET AL: "Composites of micro- and mesoporous materials: Simultaneous syntheses of MFI/MCM-41 like phases by a mixed template approach" MICROPOROUS MESOPOROUS MATER;MICROPOROUS AND MESOPOROUS MATERIALS 1999 ELSEVIER SCI B.V., AMSTERDAM, NETHERLANDS, vol. 27, no. 2, 1999, pages 181-192, XP002146183**
- **CAMBLOR M A ET AL: "Characterization of nanocrystalline zeolite Beta" MICROPOROUS MESOPOROUS MATER;MICROPOROUS AND MESOPOROUS MATERIALS DEC 9 1998 ELSEVIER SCI B.V., AMSTERDAM, NETHERLANDS, vol. 25, no. 1-3, 9 décembre 1998 (1998-12-09), pages 59-74, XP002146184**
- **KLOETSTRA K R ET AL: "Overgrowth of mesoporous MCM-41 on faujasite" MICROPOROUS MATER;MICROPOROUS MATERIALS JUL 1996 ELSEVIER SCIENCE B.V., AMSTERDAM, NETHERLANDS, vol. 6, no. 5-6, juillet 1996 (1996-07), pages 287-293, XP000911747**

**Description**

La présente invention concerne un solide acide contenant des micropores et des mésopores organisés, un procédé de préparation et son utilisation pour la conversion des charges hydrocarbonées et en particulier l'hydrocraquage.

Dans le domaine du raffinage et de la pétrochimie, et en particulier l'hydrocraquage, deux grands types de matériaux constituent la phase active acide des catalyseurs, d'une part les silice-alumines, d'autre part les zéolithes. Les silice-alumines présentent généralement des diamètres de pores compris entre 4 et 50 nm et des teneurs en $SiO_2$ entre 1 et 90% pds. Un de leur défaut majeur réside dans le fait qu'elles présentent une acidité très faible. A l'inverse, les zéolithes et plus particulièrement les tamis moléculaires de type aluminosilicate présentent une acidité 1000 à 10000 fois plus importante que les silice-alumines classiques. Cependant, les zéolithes sont des solides microporeux, avec des ouvertures de pore qui ne dépassent pas 0,8 nm, ce qui peut constituer un handicap lorsque que l'on veut traiter des charges comportant des molécules relativement volumineuses. De ce fait, lorsqu'elle est utilisée en hydrocraquage, la zéolithe doit être auparavant désaluminée, ce qui lui confère à la fois une acidité appropriée et de la mésoporosité facilitant la diffusion des molécules volumineuses.

Les travaux réalisés jusqu'à présent pour l'obtention de solides microporeux à plus large ouverture de pores ont conduit par exemple à la synthèse de l'$AlPO_4$-8 (0,79x0,87 nm) en 1990, de la VPI-5 en 1988 (1,21 nm) et de la clovérite (1,32 nm) en 1991. Néanmoins ces tamis moléculaires n'ont pu être préparés, jusqu'à présent, que dans les systèmes Al-P ou Ga-P pour la clovérite, ce qui ne leur confère pas d'acidité.

Plus récemment plusieurs types de solides à mésoporosité organisée ont été décrits, les premiers en 1992 par Mobil (MCM-41). Les solides de type MCM-41 possèdent un système mésoporeux régulier et périodique de diamètre compris entre 1,5 et 10 nm.

Des travaux récents ont eu pour objectif l'obtention par synthèse d'un solide comportant une phase microporeuse et une phase mésoporeuse. Lujano et al (EP 0811423, 1997) décrivent l'obtention d'un solide à parois cristallines microporeuses accessibles via des canaux mésoporeux. Le spectre de diffraction des rayons X obtenu sur ces matériaux correspond à celui de la zéolithe X. Il ne montre pas de mésoporosité organisée.

Les efforts de recherche de la demanderesse ont porté sur la préparation de solides organisés, possédant des pores de taille supérieure à 0,8 nm, avec une distribution en tailles de pores étroite et une acidité modulable.

Les travaux de la demanderesse ont permis d'aboutir à la préparation de solides silicoaluminates comportant une mésoporosité bien organisée, des diamètres moyens de mésopores compris entre 2 et 20 nm, une phase microporeuse zéolithique et une acidité supérieure à celles de silice-alumines ou composés mésoporeux classiques et plus proche de celle de zéolithes, et conduisant en conversion des hydrocarbures à des conversions moyennes proches de celles observées sur les zéolithes, et donc bien supérieures à celles observées sur silice-alumines ou sur les composés mésoporeux classiques.

La présente invention permet donc d'éviter les inconvénients des silice-alumines classiques à savoir leur faible acidité et leur faible activité, ainsi que les inconvénients des zéolithes qui ne permettent pas de convertir des molécules volumineuses en raison de leurs tailles de pores limitées à quelques nm.

Plus précisément, l'invention concerne un solide comprenant des micropores et des mésopores organisés et présentant :

- un rapport molaire $SiO_2/Al_2O_3$ compris entre 5-250
- en diffraction X au moins une raie à une distance interréticulaire comprise entre 20-200 Å représentative d'une mésoporosité organisée
- en spectroscopie infra-rouge au moins une bande entre 400-1600 $cm^{-1}$ caractéristique des liaisons Si-O de charpente d'une phase microporeuse zéolitique
- en analyse infra-rouge, après traitement sous vide à haute température puis chimisorption de pyridine à saturation, l'aire de la bande à environ 1545 $cm^{-1}$, représentative de l'acidité, est au moins égale à 50 pour 1 g de solide sec (exprimé en unité d'absorbance x nombre d'onde).

Le solide selon l'invention a pour caractéristiques:

- le rapport molaire silice/alumine ($SiO_2/Al_2O_3$) est compris entre 5 et 250, de préférence entre 10 et 200, de manière encore plus préférée entre 10 et 100.
- le spectre de diffraction des rayons X présente au moins une raie à une distance interréticulaire comprise entre 20 et 100 Å, de préférence au moins une raie autour de 40 ± 5 Å, représentative d'un solide mésoporeux organisé,
- le spectre de diffraction des rayons X présente des raies caractéristiques d'un composé zéolithique microporeux,
- de préférence, ledit solide présente un volume mésoporeux déterminé par la méthode BJH (norme ASTM D4641-93) au moins égal à 0,13 $cm^3$/g, de préférence avec une distribution en taille de mésopores centrée sur une valeur comprise entre 1,5 et 10 nm, de préférence entre 2 et 4 nm, et telle que la largeur à mi-hauteur soit inférieure à 2 nm, de préférence inférieure à 1 nm.

- de préférence ledit solide présente un volume microporeux déterminé par la méthode t-plot (norme ASTM D4365-85) compris entre 0,01 et 0,18 $cm^3$/g, de préférence entre 0,01 et 0,15 $cm^3$/g,
- ledit solide présente en spectroscopie infra-rouge au moins une bande (en général plusieurs) dans le domaine de longueur d'onde compris entre 400 et 1600 $cm^{-1}$ caractéristiques des liaisons Si - O de charpente d'une phase zéolithique,
- l'acidité est telle que par analyse infra-rouge, après traitement sous vide à haute température puis chimisorption de pyridine à saturation, l'aire de la bande correspondant au nombre d'onde vers 1545 $cm^{-1}$ et attribué à l'ion pyridinium, donc à l'acidité de Brönsted, exprimée en unité d'absorbance multipliée par un nombre d'onde (en $cm^{-1}$) et mesurée par rapport à la tangente au pic, est au moins égale à 50 pour 1g de solide sec, de préférence au moins égale à 80 pour 1g de solide sec.

La présente invention concerne également un procédé de préparation dudit solide et son utilisation en conversion d'hydrocarbures.

Plus précisément, le procédé de préparation comporte :

(a) mélange en solution aqueuse d'au moins une source d'aluminium, au moins une source de silicium et au moins un structurant R de la phase zéolitique, ledit mélange ayant la composition (en mole/mole) :

$$Al/Si = 0,005-0,6$$

$$R/Si = 0,1-1,5$$

$$H_2O/Si = 10-100$$

(b) autoclavage du mélange homogénéisé à 80-200°C pendant 1h-5 jours de façon à obtenir une suspension de cristaux sont la taille reste inférieure à 300nm

(c) à ladite suspension refroidie et éventuellement additionnée d'eau et d'au moins une source d'aluminium et/ou d'au moins une source de silicium, est ajouté au moins un agent tensio-actif S, de façon à obtenir à pH = 8-12 la composition (en mole/mole) :

$$Al/Si = 0,005-1$$

$$R/Si = 0,1-1,5$$

$$S/Si = 0,1-1$$

$$H_2O/S = 100-1000$$

$$H_2O/Si = 20-200$$

$$OH^-/Si = 0,1-0,4$$

(d) autoclavage à 20-160°C pendant 15 mn-5 jours

(e) le solide autoclavé est refroidi, lavé, calciné.

De préférence, la préparation de l'aluminosilicate selon l'invention comporte les étapes suivantes :

- on forme un premier mélange réactionnel en solution aqueuse comprenant notamment de l'eau, au moins une source de l'élément aluminium, au moins une source de l'élément silicium et au moins une source d'un composé organique ou minéral agissant comme structurant de la phase zéolithique et noté R. Ledit mélange a une composition en terme de rapport molaire, comprise dans les intervalles de valeurs suivants :

| Al/Si | 0,005 - 0,6, de préférence 0,01 - 0,1 |
|---|---|
| R/Si | 0,1 - 1,5 , de préférence 0,2 à 1 |
| $H_2O$/Si | 10 - 100, de préférence 10 - 50 |

- Le mélange est agité à température ambiante jusqu'à homogénéisation, par exemple pendant une heure, puis transféré dans un autoclave chemisé de polytétrafluoroéthylène et placé dans une étuve maintenue à une température comprise entre 80 et 200°C pendant une durée qui peut varier de 1 heure à 5 jours, en conditions statiques ou sous agitation. La durée de l'autoclavage est choisie telle qu'un prélèvement du mélange centrifugé, puis lavé, par exemple par redispersion dans de l'eau et centrifugation, est constitué de cristaux dont la taille est inférieure à 300 nm, de préférence inférieure à 150 nm, de manière encore plus préférée inférieure à 90 nm.
- L'autoclave est ensuite refroidi à température ambiante.
- A la suspension obtenue lors de l'étape précédente est éventuellement ajouté un deuxième mélange réactionnel en solution aqueuse comprenant notamment de l'eau, au moins une source de l'élément aluminium et/ou au moins une source de l'élément silicium.
- La suspension obtenue lors de l'étape précédente est mélangée à au moins un agent tensio-actif (ou à une solution contenant au moins un tensioactif), l'ensemble des tensioactifs étant noté S. Le mélange est agité vigoureusement à température ambiante de préférence pendant un temps au moins égal ou supérieur à 15 minutes puis il est amené à un pH compris entre 8 et 12, à l'aide d'une solution aqueuse d'un acide A. Le gel fluide obtenu a une composition en terme de rapport molaire, comprise dans les intervalles de valeurs suivants :

| Al/Si | 0,005 - 1 |
|---|---|
| R/Si | 0,1 - 1,5 , de préférence 0,2 à 1 |
| S/Si | 0,1 - 1, de préférence 0,2 - 0,5 |
| $H_2O$/S | 100 - 1000 |
| $H_2O$/Si | 20 - 200, de préférence 40- 120 |
| $OH^-$/Si | 0,1 - 0,4 |

- Le mélange est transféré dans un autoclave chemisé de polytétrafluoroéthylène et placé dans une étuve maintenue à une température comprise entre la température ambiante 20°Cet 160°C, de préférence 140°C, pendant une durée qui peut varier de 15 minutes à 5 jours, en conditions statiques, de préférence pendant une durée supérieure à trois jours. L'autoclave est ensuite refroidi à température ambiante.
- Le solide est récupéré par centrifugation ou filtration, lavé, de préférence à l'eau chaude, séché, de préférence à l'étuve à 60°C, puis calciné, de préférence sous air, à une température suffisamment élevée pour éliminer par combustion tout le composé organique. Un mode préféré de calcination est une calcination sous air à 550°C pendant 6 heures.

La source de silice peut être l'une de celles couramment utilisées dans la synthèse des zéolithes, par exemple de la silice solide en poudre, de l'acide silicique, de la silice colloïdale ou de la silice dissoute. Parmi les silices en poudre, on peut utiliser les silices précipitées, notamment celles obtenues par précipitation à partir d'une solution de silicate de métal alcalin, telle que celle appelée "KS 300" fabriquée par AKZO, et des produits similaires, des silices Aérosils (Degussa), des silices pyrogénées, par exemple du "CAB-O-SIL" et des gels de silice dans des teneurs appropriées pour être utilisées dans les pigments de renforcement destinés au caoutchouc et au caoutchouc siliconé. On peut utiliser des silices colloïdales présentant différentes tailles de particules, par exemple de diamètre équivalent moyen compris entre 10 et 15 µm ou entre 40 et 50 µm telles que celles commercialisées sous les marques déposées "LUDOX", "NALCOAG" et "SYTON". Les silices dissoutes qui peuvent être employées comprennent également les silicates au verre soluble disponibles dans le commerce, contenant 0,5 à 6,0, notamment 2,0 à 4,0 moles de $SiO_2$ par mole d'oxyde de métal alcalin, des silicates de métaux alcalins "actifs" tels que définis dans le brevet britannique GB-A-1.193.254, et des silicates obtenus par dissolution de silice dans un hydroxyde de métal alcalin ou un hydroxyde d'ammonium quaternaire, ou encore un mélange de ceux-ci. On peut aussi utiliser les esters siliciques hydrolysables. De préférence on utilisera comme source de silice les silices pyrogénées, les silices Aerosils.

La source d'aluminium est choisie parmi l'aluminium métal, l'aluminate de sodium, ou un sel d'aluminium, par exemple du chlorure, du nitrate ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Certaines ou l'ensemble des sources d'alumine et de silice peuvent éventuellement être ajoutées sous forme d'aluminosilicate.

Les différents agents organiques qui peuvent être utilisés lors de la formation du premier mélange réactionnel sont des agents utilisés pour réaliser la synthèse de différents tamis moléculaires connus jusqu'à présent. On pourra citer comme agents organiques utilisables et à titre d'exemples non limitatifs les hydroxydes de tétra-alkylammonium (le groupement alkyl étant de préférence un groupement méthyl, éthyl, propyl ou butyl), la quinuclidine, les sels d'amines cycliques, les amines cycliques et aliphatiques, les alcools. De préférence le structurant organique est l'hydroxyde de tétraéthylammonium (TEAOH) conduisant spécifiquement à la synthèse de la zéolithe bêta.

Parmi les tensioactifs constituant le groupe S, on peut citer l'hydroxyde ou l'halogénure d'alkyltriméthylammonium, les amines grasses, les tensioactifs contenant une chaîne polyoxyde d'éthylène. De manière préférée, on utilisera le bromure de cétyltriméthylammonium.

Parmi les acides pouvant être utilisés dans la deuxième étape de la préparation selon l'invention pour ajuster (si besoin) le pH une valeur comprise entre 8 et 12, on peut citer à titre d'exemple non limitatif l'acide chlorhydrique, l'acide fluorhydrique, l'acide sulfurique, l'acide nitrique, ainsi que les acides organiques solubles, par exemple les acides formique, acétique, propionique, butyrique.

Le solide silico-aluminate selon l'invention est catalytiquement actif pour réaliser la conversion de charges pétrolières hydrocarbonées, plus spécifiquement pour réaliser l'hydrocraquage. Ledit solide est également plus particulièrement adapté à la conversion des molécules lourdes.

Le solide silico-aluminate selon l'invention peut être utilisé tel quel ou mélangé et mis en forme avec au moins un liant ou une matrice habituellement amorphe ou mal cristallisée choisie par exemple dans le groupe formé par l'alumine, la silice, la magnésie, l'oxyde de titane, la zircone, les phosphates d'aluminium, de titane ou de zirconium, les argiles, l'oxyde de bore et les combinaisons de deux au moins de ces composés. Le mélange obtenu est appelé support.

La matrice est de préférence choisie dans le groupe formé par la silice, l'alumine, la magnésie, les combinaisons silice-alumine, les combinaisons silice-magnésie.

Le support selon l'invention peut être mis en forme par toutes les méthodes bien connues de l'homme du métier. Avantageusement, il peut être mis en forme par extrusion, par séchage par atomisation ou par toute autre technique connue de l'homme de l'art. La mise en forme est suivie d'une calcination.

L'invention concerne donc également la composition (le support) ci-dessus décrit et la composition (le catalyseur) contenant ledit support et au moins un élément catalytique. Il est possible également que le support puisse jouer le rôle de catalyseur c'est-à-dire en l'absence d'élément catalytique.

Dans le cas où l'application envisagée nécessite la présence d'une fonction hydrodéshydrogénante, comme en particulier l'hydrocraquage, l'élément hydrodéshydrogénant peut être introduit dans le support à divers niveaux de la préparation et de diverses manières. L'élément hydro-déshydrogénant est choisi dans le groupe formé par les métaux du groupe VIII non nobles et les métaux du groupe VIB.

Dans le cas de l'hydrocraquage, la fonction hydro-deshydrogénante est généralement assurée par au moins un métal ou composé de métal du groupe VIII non noble tels que le nickel et le cobalt notamment. On peut utiliser une combinaison d'au moins un métal ou composé de métal du groupe VIB (notamment le molybdène ou le tungstène) et d'au moins un métal ou composé de métal du groupe VIII non noble (notamment le cobalt ou le nickel) de la classification périodique des éléments. La concentration totale en oxydes de métaux des groupes VIB et/ou VIII non noble est comprise entre 1 et 40 % en poids et de préférence entre 3 et 40 %, avantageusement entre 8 et 40%, voire 10 à 40% et mieux 10-30% en poids, et le rapport pondéral exprimé en oxyde métallique de métal (ou métaux) du groupe VIb sur métal (ou métaux) du groupe VIII non noble est compris entre 1,25 et 20 et de préférence entre 2 et 10. De plus, ce catalyseur peut contenir du phosphore. La teneur en phosphore, exprimée en concentration en oxyde de phosphore $P_2O_5$, sera inférieure à 15 % en poids et de préférence inférieure à 10 % en poids.

De préférence, dans le cas où on utilise une combinaison des métaux des groupes GVIII non noble et VIB, le catalyseur subit une étape de sulfuration préalablement à une utilisation en hydrocraquage.

Dans le cas de leur utilisation en hydrocraquage, les catalyseurs ainsi obtenus présentent, par rapport aux catalyseurs zéolitiques de l'art antérieur, une sélectivité améliorée pour la production de distillats moyens de très bonne qualité.

Les charges employées dans le procédé d'hydrocraquage sont par exemple des gas-oils, des gas-oils sous vide, des résidus désasphaltés ou hydrotraités ou équivalents. Ce peut être des coupes lourdes constituées d'au moins 80 % en volume de composés dont les points d'ébullition sont supérieurs à 350°C et de préférence inférieurs à 580°C. Elles contiennent généralement des hétéroatomes tels que soufre et azote. La teneur en azote est usuellement comprise entre 1 et 5000 ppm poids et la teneur en soufre entre 0,01 et 5% poids. Les conditions de l'hydrocraquage telles que, température, pression, taux de recyclage d'hydrogène, vitesse volumique horaire, pourront être très variables en fonction de la nature de la charge, de la qualité des produits désirés, des installations dont dispose le raffineur.

Les températures sont en général supérieures à 230 °C et souvent comprises entre 300°C et 480°C, de préférence inférieures à 450°C. La pression est supérieure ou égale à 2 MPa et en général supérieure à 3 MPa voire 10 MPa. Le taux de recyclage d'hydrogène est au minimum de 100 et souvent compris entre 260 et 3000 litres d'hydrogène par litre de charge. La vitesse volumique horaire est comprise en général entre 0,2 et 10 $h^{-1}$.

Les exemples suivants illustrent la présente invention sans toutefois en limiter la portée.

**Exemple 1 :**

**Préparation :**

Solution ① : 0,064 g d'aluminium métal sont dissous dans 5,283 g de solution aqueuse de TEAOH 35 %

Solution ② : 3,533 g d'Aerosil 200 sont dissous dans 8,567 g de TEAOH 35 % additionnés de 6,883 g d'eau distillée.

La dissolution se fait au bain marie à 40-60°C pendant quelques heures. Une fois que les deux solutions sont limpides, la solution ① est ajoutée à la solution ②, sous agitation. Le mélange obtenu, de composition molaire :

$$1\ SiO_2{:}0{,}04\ Al{:}0{,}57\ TEAOH{:}15\ H_2O$$

est agité pendant 1 heure à température ambiante afin d'être bien homogène. Il est ensuite transféré dans un autoclave chemisé de PTFE, lequel est placé dans une étuve maintenue à 140°C pendant 3 jours, en conditions statiques. L'autoclave est ensuite refroidi à température ambiante. A ce stade, un prélèvement (P) permet de s'assurer de la qualité du produit intermédiaire obtenu. Le prélèvement (P) est centrifugé à 15000 tr/min pendant 1 heure. Le produit obtenu est lavé par redispersion dans de l'eau et centrifugation. Le solide obtenu par prélèvement est une zéolithe β complètement cristallisée ; les cristaux ont une taille de 50-70 nm et le rapport molaire Si/Al de la zéolithe déterminé par fluorescence X est de 16,2.

Solution ③ : 4,31 g de $C_{16}$TMABr sont dissous dans 51,38 g d'eau distillée (au bain marie à 40°C pendant quelques minutes).

La suspension obtenue par autoclavage est ajoutée sous agitation vigoureuse à la solution ③. Le mélange est agité pendant 20 minutes à température ambiante, puis il est acidifié à pH=10, toujours sous agitation vigoureuse, à l'aide de 3,00 g d'une solution aqueuse d'HCl à 18,16 %. Le gel fluide obtenu a la composition molaire suivante :

$$1\ SiO_2{:}0{,}04\ Al{:}0{,}57\ TEAOH{:}0{,}20\ C_{16}TMABr{:}0{,}257\ HCl{:}66\ H_2O.$$

Le mélange est transféré dans un autoclave chemisé de PTFE puis chauffé à 140°C pendant 3 jours. L'autoclave est ensuite refroidi. Le solide est récupéré par centrifugation ou filtration, lavé à l'eau chaude (60°C), séché à l'étuve à 60°C, puis calciné à 550°C pendant 6 heures sous air.

Caractéristiques :

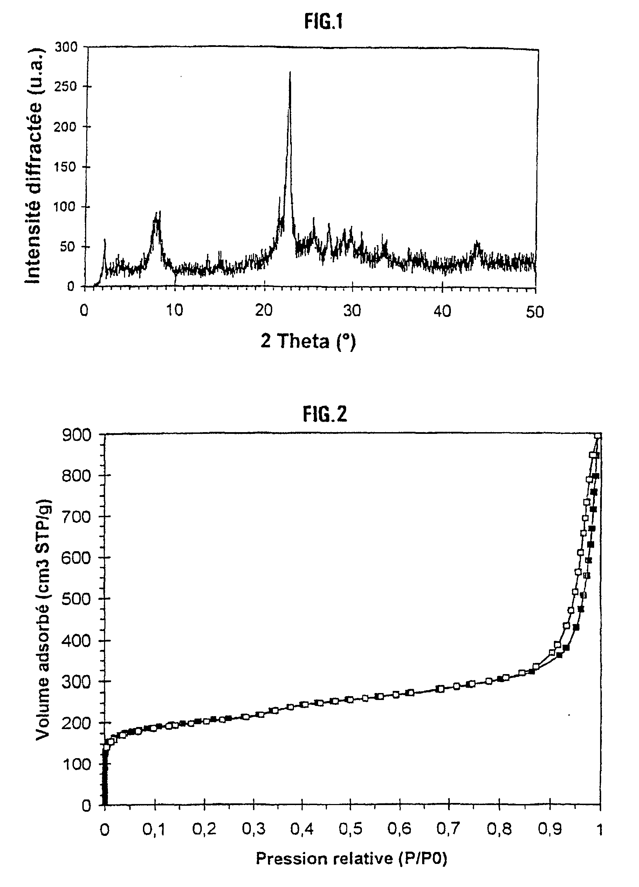

⌑ Le DRX du solide présente des pics caractéristiques attribués à la zéolithe β et à la MCM-41 (figure 1 et tableau 1). Le spectre infra-rouge présente également deux bandes à 520 et 560 $cm^{-1}$ caractéristiques de la zéolithe β.

tableau 1 :

| Valeurs des signaux du DRX de l'exemple 1 | | | | | | | |
|---|---|---|---|---|---|---|---|
| d (Å) | I/Imax (%) | d (Å) | I/Imax (%) | d (Å) | I/Imax (%) | d (Å) | I/Imax (%) |
| 39,94 | 100 | 6,52 | 3 | 3,47 | 3 | 2,89 | 1 |
| 22,38 | 11 | 5,91 | 18 | 3,27 | 4 | 2,67 | 2 |

tableau 1 : (suite)

| Valeurs des signaux du DRX de l'exemple 1 | | | | | | | |
|---|---|---|---|---|---|---|---|
| d (Å) | I/Imax (%) | d (Å) | I/Imax (%) | d (Å) | I/Imax (%) | d (Å) | I/Imax (%) |
| 11,29 | 32 | 4,11 | 10 | 3,08 | 4 | 2,45 | 2 |
|  |  | 3,92 | 41 | 3,00 | 4 | 2,06 | 2 |

¤ L'isotherme d'adsorption d'azote (figure 2) montre la présence d'une marche caractéristique d'une mésoporosité. Le point d'inflexion est situé vers $p/p^0$=0,30-0,35.

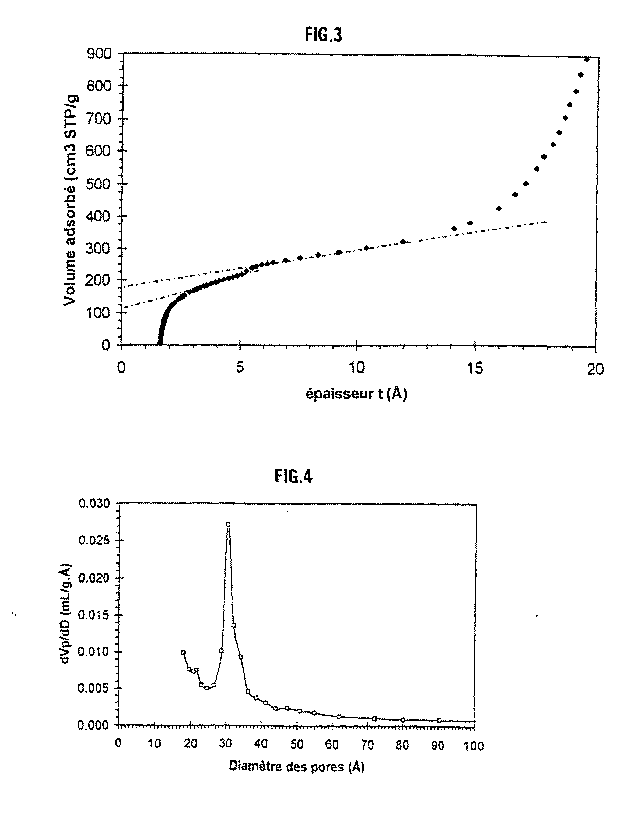

¤ Le volume microporeux, déterminé par t-plot (norme ASTM D 4365-85), est $V_{micro}$ = 0,17 $cm^3.g^{-1}$ (figure 3).

¤ Le produit présente une distribution en taille des pores très étroite dans le domaine mésoporeux. L'application de la méthode BJH (Norme ASTM D 4641-93) révèle un diamètre de pores de 34 Å (largeur à mi-hauteur = 4 Å), correspondant à un volume mésoporeux de 0,14 $cm^3.g^{-1}$ (figure 4).

Le rapport molaire Si/Al de la zéolithe β est de 16,2. Le rapport molaire Si/Al de la partie mésoporeuse est de 52,6. Le rapport molaire global du solide est de 23,9.

L'acidité est caractérisée par analyse infra-rouge, après traitement sous vide poussé (autour de $10^{-6}$ mbar) à 350°C pendant 10h, adsorption de pyridine pendant 10 secondes à 25°C, désorption pendant 2h à 25°C puis désorption pendant 1h à 150°C, toujours sous vide poussé (autour de $10^{-6}$ mbar). L'air du pic correspondant au nombre d'onde autour de 1545 $cm^{-1}$, attribuée à l'ion pyridinium, donc à l'acidité de Brönsted, exprimée en unité d'absorbance multipliée par un nombre d'onde (en $cm^{-1}$) et mesurée par rapport à la tangente au pic, est égale à 106 ± 10 pour 1g de solide sec.

Après dépôt de 0,5% poids de Pt par imprégnation à sec en utilisant comme précurseur une solution aqueuse du composé $Pt(NH_3)_4Cl_2$, suivie d'une calcination à 450°C sous air sec et d'une réduction à 450 °C sous atmosphère d'hydrogène pur, le catalyseur convertit 85% poids de la charge constituée de n-heptane dans les conditions opératoires suivantes:

T réaction = 230 °C, rapport molaire H2/ n-heptane = 2, pression totale de 1 bar, et une pph=1, c'est à dire un débit de n-heptane de 1 gramme par gramme de phase active et par heure.

**Exemple 2 :**

**Préparation**

Solution ① : 0,077 g d'aluminium métal sont dissous dans 6,31 g de solution aqueuse de TEAOH 35 %

Solution ② : 4,34g d'Aerosil 200 sont dissous dans 11,28 g de TEAOH 35 % additionnés de 8,97 g d'eau distillée. La dissolution se fait au bain marie à 40-60°C pendant quelques heures. Une fois que les deux solutions sont limpides, la solution ① est ajoutée à la solution ②, sous agitation. Le mélange obtenu, de composition molaire :

1 $SiO_2$:0,04 Al:0,59 TEAOH:15 $H_2O$

est agité pendant 1 heure à température ambiante afin d'être bien homogène. Il est ensuite transféré dans un autoclave chemisé de PTFE, lequel est placé dans une étuve maintenue à 140°C pendant 3 jours, en conditions statiques. L'autoclave est ensuite refroidi à température ambiante. A ce stade, un prélèvement (P) permet de s'assurer de la qualité du produit intermédiaire obtenu. Le prélèvement (P) est centrifugé à 15000 tr/min pendant 1 heure. Le produit obtenu est lavé par redispersion dans de l'eau et centrifugation. Le solide obtenu par prélèvement est une zéolithe β complètement cristallisée ; les cristaux ont une taille de 50-70 nm et le rapport molaire Si/Al de la zéolithe déterminé par fluorescence X est de 16,5.

Solution ③ : 0,049 g d'aluminium métal sont dissous dans 3,01 g de solution aqueuse de TEAOH 35 %

Solution ④ : 2,60 g d'Aerosil 200 sont dissous dans 7,65 g de TEAOH 35 % additionnés de 13,8 g d'eau distillée. La dissolution se fait au bain marie à 40-60°C pendant quelques heures. Une fois que les solutions sont limpides, la solution ③ est ajoutée à la solution ④, sous agitation.

Solution ⑤ : 5,28 g de $C_{16}$TMABr sont dissous dans 18,63 g d'eau distillée (au bain marie à 40°C pendant quelques minutes).

Au mélange (③ + ④ ) est ajouté 32,85 g d'eau ainsi que le contenu de l'autoclave. La suspension est laissée sous agitation pendant 15 minutes, puis la solution ⑤ est ajoutée : un précipité (floculat) apparaît. Le mélange est agité pendant 20 minutes à température ambiante, puis il est acidifié à pH=10, toujours sous agitation vigoureuse, à l'aide de 7,82 g d'une solution aqueuse d'HCl à 18,16 %. Le gel fluide obtenu a la composition molaire suivante :

$$1 \ SiO_2:0,04 \ Al:0,59 \ TEAOH:0,125 \ C_{16}TMABr:0,34 \ HCl:47,5 \ H_2O.$$

Le mélange est transféré dans un autoclave chemisé de PTFE puis chauffé à 140°C pendant 3 jours. L'autoclave est ensuite refroidi. Le solide est récupéré par centrifugation ou filtration, lavé à l'eau chaude (60°C), séché à l'étuve à 60°C, puis calciné à 550°C pendant 6 heures sous air.

Caractéristiques

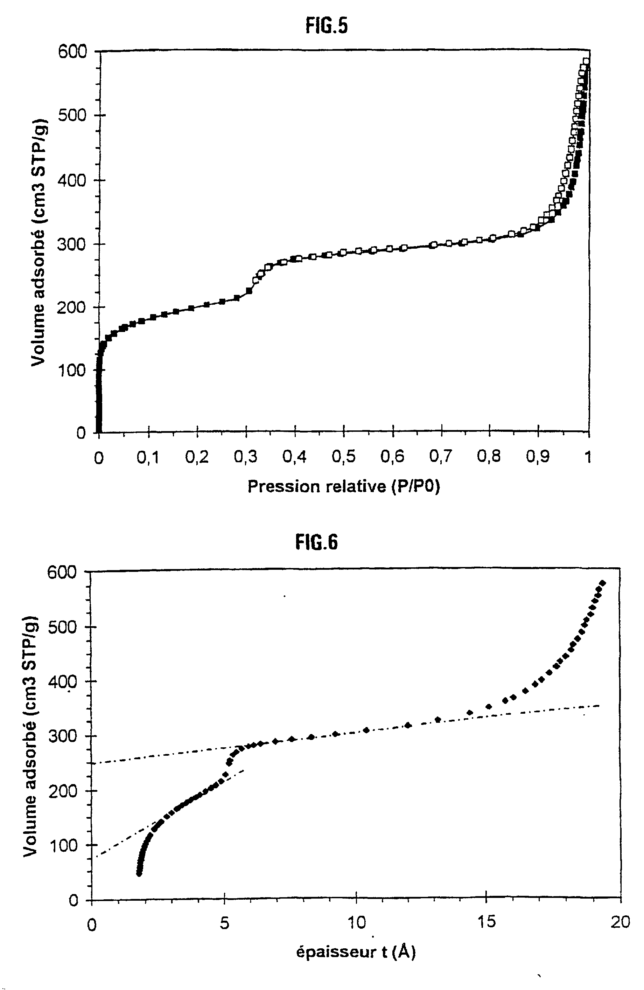

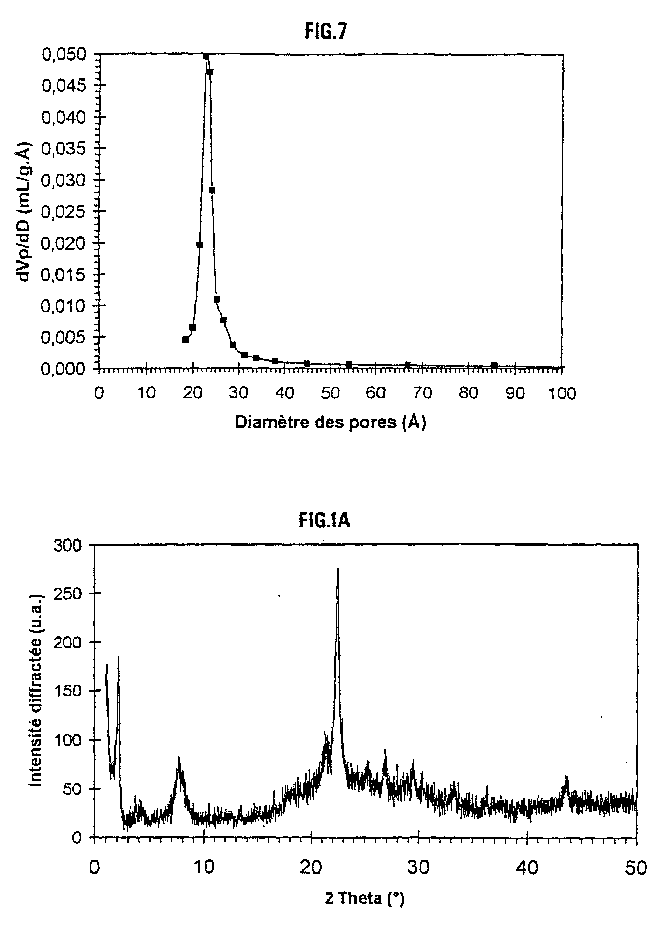

Le DRX du solide obtenu (figure 2) présente les caractéristiques de la MCM-41 et de la zéolithe $\beta$. Le spectre infra-rouge présente également deux bandes à 520 et 560 $cm^{-1}$ caractéristiques de la zéolithe $\beta$.
L'isotherme d'adsorption d'azote (figure 5) montre la présence d'une marche caractéristique d'une mésoporosité. Le point d'inflexion est situé à $p/p^0=0,32$.
⧄ Le volume microporeux, déterminé par t-plot (norme ASTM D 4365-85), est $V_{micro} = 0,12 \ cm^3.g^-$ (figure 6).
Le produit présente une distribution en taille des pores très étroite dans le domaine mésoporeux (figure 7). L'application de la méthode BJH (Norme ASTM D 4641-93) révèle un diamètre de pores de 23 Å (largeur à mi-hauteur = 4 Å), correspondant à un volume mésoporeux de 0,18 $cm^3.g^{-1}$.
L'acidité est caractérisée par analyse infra-rouge, après traitement sous vide poussé (autour de $10^{-6}$ mbar) à 350°C pendant 10h, adsorption de pyridine pendant 10 secondes à 25°C, désorption pendant 2h à 25°C puis désorption pendant 1h à 150°C, toujours sous vide poussé (autour de $10^{-6}$ mbar). L'air du pic correspondant au nombre d'onde autour de 1545 $cm^{-1}$, attribuée à l'ion pyridinium, donc à l'acidité de Brönsted, exprimée en unité d'absorbance multipliée par un nombre d'onde (en $cm^{-1}$) et mesurée par rapport à la tangente au pic, est égale à 125 ± 10 pour 1g de solide sec.
Après dépôt de 0,5% poids de Pt par imprégnation à sec en utilisant comme précurseur le composé Pt $(NH_3)_4Cl_2$, suivie d'une calcination à 450°C sous air sec et d'une réduction à 450 °C sous atmosphère d'hydrogène pur, le catalyseur convertit 88% poids de la charge constituée de n-heptane dans les conditions opératoires suivantes : T réaction = 230 °C, rapport molaire H2/ n-heptane = 2, pression totale de 1 bar, et une pph=1, c'est à dire un débit de n-heptane de 1 gramme par gramme de phase active et par heure.

**Revendications**

**1.** Solide comprenant des micropores et des mésopores organisés et présentant :

- un rapport molaire $SiO_2/Al_2O_3$ compris entre 5-250
- en diffraction X au moins une raie à une distance interréticulaire comprise entre 20-200 Å représentative d'une mésoporosité organisée
- en spectroscopie infra-rouge au moins une bande entre 400-1600 $cm^{-1}$ caractéristique des liaisons Si-O de charpente d'une phase microporeuse zéolitique
- en analyse infra-rouge, après traitement sous vide à haute température puis chimisorption de pyridine à saturation, l'aire de la bande à environ 1545 $cm^{-1}$, représentative de l'acidité, est au moins égale à 50 pour 1 g de solide sec (exprimé en unité d'absorbance x nombre d'onde)
- des cristaux de zéolithe de taille inférieure à 150 nm.

**2.** Solide selon la revendication 1 représentant en outre :

- un volume mésoporeux au moins égal à 0,13 $cm^3/g$
- un volume microporeux compris entre 0,01 et 0,18 $cm^3/g$.

**3.** Solide selon l'une des revendications précédentes dans lequel la distribution en taille de mésopores est centrée sur une valeur comprise entre 1,5 et 10 nm.

**4.** Solide selon l'une des revendications précédentes présentant en diffraction X une raie à 40 ± 5 Å.

**5.** Solide selon l'une des revendications précédentes présentant les raies de la zéolite bêta et de la MCM-41.

**6.** Procédé de préparation d'un solide selon l'une des revendications précédentes, **caractérisé en ce qu'**il comporte les étapes successives suivantes :

(a) mélange en solution aqueuse d'au moins une source d'aluminium, au moins une source de silicium et au moins un structurant R de la phase zéolitique, ledit mélange ayant la composition (en mole/mole) :

$$Al/Si = 0,005\text{-}0,6$$

$$R/Si = 0,1\text{-}1,5$$

$$H_2O/Si = 10\text{-}100$$

(b) autoclavage du mélange homogénéisé à 80-200°C pendant lh-5 heures de façon à obtenir une su pension de cristaux sont la taille reste inférieure à 300nm

(c) à ladite suspension refroidie et éventuellement additionnée d'eau et d'au moins une source d'aluminium et/ou d'au moins une source de silicium, est ajouté au moins un agent tensio-actif S, de façon à obtenir à pH = 8-12 la composition (en mole/mole) :

$$Al/Si = 0,005\text{-}1$$

$$R/Si = 0,1\text{-}1,5$$

$$S/Si = 0,1\text{-}1$$

$$H_2O/S = 100\text{-}1000$$

$$H_2O/Si = 20\text{-}200$$

$$OH^-/Si = 0,1\text{-}0,4$$

(d) autoclavage à 20-160°C pendant 15 mn-5 jours
(e) le solide autoclavé est refroidi, lavé, calciné.

**7.** Procédé selon la revendication 6 **caractérisé en ce que** les cristaux obtenus après l'autoclavage (b) ont une taille inférieure à 150 nm.

**8.** Procédé selon l'une des revendications 6 ou 7, **caractérisé en ce que** le structurant R est choisi dans le groupe formé par les hydroxydes de tétra-alkylammonium, la quinuclidine, les sels d'amines cycliques, les amines cycliques et aliphatiques, les alcools.

**9.** Procédé selon la revendication 8, **caractérisé en ce que** le structurant R est l'hydroxyde de tétraethylammonium.

**10.** Composition comprenant le solide selon l'une des revendications 1-4 ou le solide obtenu par le procédé de préparation selon l'une des revendications 6-9 et comprenant également au moins une matrice.

**11.** Composition selon la revendication 10 dans lequel la matrice est choisie dans le groupe formé par l'alumine, la silice, la magnésie, l'oxyde de titane, la zircone, les phosphates d'aluminium, les phosphates de titane, les phosphates de zirconium, les argiles, l'oxyde de bore.

**12.** Composition selon l'une des revendications 10 ou 11 et comprenant en outre au moins un élément catalytique.

**13.** Composition selon la revendication 12 dans lequel l'élément catalytique est choisi dans le groupe formé par les éléments du groupe VIII non nobles et les éléments du groupe VIB.

**14.** Composition selon l'une des revendications 10 à 13 contenant également du phosphore.

**15.** Utilisation de la composition selon l'une des revendications 10 à 14 pour la conversion de charges hydrocarbonées.

**16.** Utilisation selon la revendication 15 pour l'hydrocraquage.

**17.** Utilisation selon l'une des revendications 15 ou 16 pour la conversion des charges lourdes.

**Patentansprüche**

**1.** Ein Feststoff, der organisierte Mikroporen und Mesoporen umfasst und aufweist:

a. ein Molverhältnis $SiO_2/Al_2O_3$ zwischen 5-250
b. als Röntgenstrahlung wenigstens eine Spektrallinie unter einem Zwischennetzabstand zwischen 20-200 Å, was repräsentativ für eine organisierte Mesoporosität ist
c. als Infrarotspektroskopie wenigstens eine Bande zwischen 400-1600 $cm^{-1}$, welche charakteristisch für Si-O-Verbindungen des Gerüstes einer zeolithischen mikroporösen Phase ist
d. als Infrarotanalyse ist nach Vakuumbehandlung bei hoher Temperatur dann Pyridinchemisorption bei Sättigung der Bereich der Bande bei etwa 1545 $cm^{-1}$, der repräsentativ für die Acidität ist, wenigstens gleich 50 für 1 g trockenen Feststoffs (ausgedrückt als Absorptionseinheit x Wellenzahl) und
e. Zeolithkristalle von einer Abmessung kleiner als 150 nm.

**2.** Feststoff nach Anspruch 1, im übrigen aufweisend:

a. ein mesoporöses Volumen von wenigstens 0,13 $cm^3/g$ und
b. ein mikroporöses Volumen zwischen 0,01 und 0,18 $cm^3/g$.

**3.** Feststoff nach einem der vorhergehenden Ansprüche, bei dem die Abmessungsverteilung der Mesoporen zentriert ist auf einen Wert zwischen 1,5 und 10 nm.

**4.** Feststoff nach einem der vorhergehenden Ansprüche, der in der Röntgenstrahldiffraktion eine Spektrallinie bei 40 ± 5 Å hat.

**5.** Feststoff nach einem der vorhergehenden Ansprüche, der Spektrallinien des Zeolithen Beta und der MCM-41 hat.

**6.** Verfahren zur Herstellung eines Feststoffs nach einem der vorhergehenden Ansprüche, **dadurch gekennzeichnet, dass** es die folgenden Stufen umfasst:

i. Mischen in wässriger Lösung wenigstens einer Aluminiumquelle, wenigstens einer Quelle für Silizium und wenigstens eines Strukturbildners R für die zeolithische Phase, wobei das Gemisch die Zusammensetzung (Mol/Mol) hat:

$$Al/Si = 0,005\text{-}0,6$$

$$R/Si = 0,1\text{-}1,5$$

$$H_2O/Si = 10\text{-}100$$

ii. Autoklavieren des homogenisierten Gemisches bei 80-200°C 1 bis 5 Stunden lang, derart, dass man eine Kristallsuspension erhält, deren Abmessung unterhalb 300 nm bleibt

iii. diese gekühlte und gegebenenfalls mit Wasserzusatz und wenigstens einer Aluminiumquelle oder wenigstens einer Siliziumquelle versehene Suspension wird wenigstens einem spannungsaktiven Mittel S zugegeben, derart, dass man bei pH = 8-12 die Zusammensetzung (in Mol/Mol) erhält:

$$Al/Si = 0,005\text{-}1$$

$$R/Si = 0,1\text{-}1,5$$

$$S/Si = 0,1\text{-}1$$

$$H_2O/S = 100\text{-}1000$$

$$H_2O/Si = 20\text{-}200$$

$$OH^-/Si = 0,1\text{-}0,4$$

iv. Autoklavieren bei 20-160°C 15 Minuten bis 5 Tage lang und

v. der autoklavierte Feststoff wird gekühlt, gewaschen und kalziniert.

7. Verfahren nach Anspruch 6, **dadurch gekennzeichnet, dass** die nach Autoklavieren (b) erhaltenen Kristalle eine Abmessung kleiner als 150 nm haben.

8. Verfahren nach einem der Ansprüche 6 oder 7, **dadurch gekennzeichnet, dass** der Strukturbildner R gewählt ist aus der Gruppe, die gebildet wird durch die Hydroxyde des Tetra-Alkylammoniums, das Quinuclidin, die zyklischen Aminsalze, die zyklischen und aliphatischen Amine und die Alkohole.

9. Verfahren nach Anspruch 8, **dadurch gekennzeichnet, dass** der Strukturbildner R Tetraethylammoniumhydroxyd ist.

10. Zusammensetzung, den Feststoff nach einem der Ansprüche 1 bis 4 oder den Feststoff nach dem Herstellungsverfahren eines der Ansprüche 6 bis 9 erhaltenen umfassend, und ebenfalls noch wenigstens eine Matrix umfassend.

11. Zusammensetzung nach Anspruch 10, bei dem die Matrix gewählt ist aus der Gruppe, die gebildet ist durch Aluminiumoxid, Siliziumoxid, Magnesiumoxid, Titanoxid, Zirkonoxid, die Aluminiumphosphate, die Phosphate des Titans, die Phosphate des Zirkoniums, die Tone und Boroxid.

12. Zusammensetzung nach einem der Ansprüche 10 oder 11 und im übrigen wenigstens ein katalytisches Element umfassend.

13. Zusammensetzung nach Anspruch 12, bei dem das katalytische Element gewählt ist aus der Gruppe, die gebildet wird durch die nicht-edlen Elemente der Gruppe VIII und die Elemente der Gruppe VIB.

14. Zusammensetzung nach einem der Ansprüche 10 bis 13, ebenfalls Phosphor enthaltend.

15. Verwendung der Zusammensetzung nach einem der Ansprüche 10 bis 14 für die Umwandlung von kohlenwasserstoffhaltigen Chargen.

16. Verwendung nach Anspruch 15 für das Hydrokracken.

**17.** Verwendung nach einem der Ansprüche 15 oder 16 zur Umwandlung schwerer Chargen.

**Claims**

**1.** Solid that comprises organized micropores and mesopores and that has:

-- an $SiO_2/Al_2O_3$ molar ratio of between 5-250
-- by X-diffraction at least one line at an interrecticular distance of between 20-200 Å that represents an organized mesoporosity
-- by infrared spectroscopy at least one band between 400-1600 $cm^{-1}$ that is characteristic of the Si-O framework bonds of a zeolitic microporous phase
-- by infrared analysis, after high-temperature vacuum treatment then pyridine chemisorption to saturation, the area of the band at about 1545 $cm^{-1}$, representative of the acidity, is at least equal to 50 per 1 g of dry solid (expressed by absorbance unit x wave number)

- zeolite crystals smaller than 150 nm in size.

**2.** Solid according to claim 1, further representing:

-- a mesoporous volume that is at least equal to 0.13 $cm^3/g$
-- a microporous volume that is between 0.01 and 0.18 $cm^3/g$.

**3.** Solid according to one of the preceding claims, in which the mesopore size distribution is centered at a value of between 1.5 and 10 nm.

**4.** Solid according to one of the preceding claims that has, in X diffraction, a line at $40 \pm 5$ Å.

**5.** Solid according to one of the preceding claims that has the lines of the beta zeolite and the MCM-41.

**6.** Process for the preparation of a solid according to one of the preceding claims, **characterized in that** it comprises the following successive stages:

(a) mixing in aqueous solution of at least one aluminum source, at least one silicon source and at least one structuring agent R of the zeolitic phase, whereby said mixture has the composition (in mol/mol):

Al/Si = 0.005-0.6

R/Si = 0.1-1.5

$H_2O$/Si = 10-100

(b) autoclaving of the homogenized mixture at 80-200°C for 1 hour to 5 hours to obtain a crystal suspension whose size remains smaller than 300 nm
(c) at least one surfactant S is added to said cooled suspension that is optionally diluted with water and at least one aluminum source and/or at least one silicon source to obtain at pH = 8-12 the composition (in mol/mol):

Al/Si = 0.005-1

R/Si = 0.1-1.5

$$S/Si = 0.1\text{-}1$$

$$H_2O/S = 100\text{-}1000$$

$$H_2O/Si = 20\text{-}200$$

$$OH^-/Si = 0.1\text{-}0.4$$

    (d) autoclaving at 20-160°C for 15 minutes to 5 days
    (e) the autoclaved solid is cooled, washed, and calcined.

7. Process according to claim 6, wherein the crystals that are obtained after autoclaving (b) are smaller than 150 nm in size.

8. Process according to one of claims 6 or 7, wherein structuring agent R is selected from the group that is formed by tetra-alkylammonium hydroxides, quinuclidine, cyclic amine salts, cyclic and aliphatic amines, and alcohols.

9. Process according to claim 8, wherein structuring agent R is tetraethylammonium hydroxide.

10. Composition that comprises the solid according to one of claims 1-4 or the solid that is obtained by the process of preparation according to one of claims 6-9 and that also comprises at least one matrix.

11. Composition according to claim 10, wherein the matrix is selected from the group that is formed by alumina, silica, magnesia, titanium oxide, zirconia, aluminum phosphates, titanium phosphates, zirconium phosphates, clays, and boron oxide.

12. Composition according to one of claims 10 or 11 and also comprising at least one catalytic element.

13. Composition according to claim 12, wherein the catalytic element is selected from the group that is formed by the non-noble elements of group VIII and the elements of group VIB.

14. Composition according to one of claims 10 to 13 that also contains phosphorus.

15. Use of the composition according to one of claims 10 to 14 for the conversion of hydrocarbon feedstocks.

16. Use according to claim 15 for hydrocracking.

17. Use according to one of claims 15 or 16 for the conversion of heavy feedstocks.

## FIG.1

## FIG.2

## FIG.3

## FIG.4

## FIG.5

## FIG.6

## FIG.7

## FIG.1A